# EUROPEAN PATENT SPECIFICATION

(11) **EP 4 573 892 B1**
(45) Date of publication and mention of the grant of the patent: **18.03.2026**
(21) Application number: 24185515.4
(22) Date of filing: 28.06.2024
(51) Int. Cl.: A01K 1/015, A01G 24/23, A01G 24/28

(54) **PEAT COMPOSITION, METHOD FOR THE PRODUCTION AND USE THEREOF**
TORFZUSAMMENSETZUNG, VERFAHREN ZU DEREN HERSTELLUNG UND DEREN VERWENDUNG
COMPOSITION DE TOURBE, SON PROCÉDÉ DE PRODUCTION ET SON UTILISATION

(43) Date of publication of application: 25.06.2025
(73) Proprietor: Baltic Peat, UAB, 65206 Varena (LT)
(72) Inventor: Pupienis, Dalius, 14175 Pasilaiciu kaimas. (LT); Pupienyte, Migle, 14175 Pasilaiciu kaimas. (LT)
(74) Representative: Metida

(56) References cited:
- EP-B1- 3 136 845
- US-A- 5 271 355

## Description

### FIELD OF THE INVENTION

The present invention relates to the field of preparation of peat composition which is based on sphagnum peat moss, wood shavings and Eriophorum fibers and a method for the preparation of said composition. Prepared peat composition is used as bedding litter for birds and other animals and as plant substrate.

### BACKGROUND OF THE INVENTION

When selecting bedding materials for poultry facilities, growers consider several critical aspects. Bedding must be highly absorbent yet should also dry reasonably quickly. Although many paper products absorb moisture effectively, they often fail to dry adequately. It's essential that used bedding material has a secondary purpose. Without a viable reuse option, growers face the challenge of disposing of large quantities of used litter, which is not ecologically sustainable. The material must be readily accessible. Even if a bedding material is effective once in use, difficulties in procurement can deter its adoption. Bedding materials must be competitively priced with current options. However, if a new material offers added value after use, or if existing materials become scarce or decline in quality, growers might consider switching. The chosen bedding material must be safe for both the poultry and the growers, not fostering growth environments for pests like litter beetles. Bedding litter should not adversely affect other animals, wildlife, or plants and must be free of harmful contaminants like pesticides or metals, as poultry can ingest up to 4% of their diet from the litter, impacting their health and the safety of derived products. Pine shavings are commonly used because they meet these requirements effectively, balancing performance, availability, and cost.

In addition, there are a number of plants, such as bilberry, rhododendron, lingonberry, cranberry and others that like acidic soil. Therefore, there is a great need for substrates that create and maintain acidic soil.

PL20220441035 document describes bedding material for farm animals, especially poultry, containing straw and natural mineral sorbents, characterized by the fact that it contains mushroom substrate and dried herbs and fruits.

US4827871 describes poultry litter with compacted peat fragments and wood chips. Due to peat compaction, the litter is insufficiently ventilated, this results in the accumulation of moisture in the litter material.

PL20220441037 describes a method of producing bedding material for animals, especially for poultry, in the form of an agglomerate, wherein the raw material is mushroom substrate which is thermally treated with superheated steam at a temperature of 100°C - 120°C, then cooled and dried to a humidity of 50% - 60% and then mixed with straw and/or dried herbs and fruits with the addition of straw and/or dried herbs. GB2465142A discloses the preparation of compressed straw litter. The described litter is usually used for hoofed animals such as horses, ponies, and cows. The litter consists of compacted pellets or briquettes of chopped straw impregnated with a disinfectant. Litter produced in this way is sufficiently sterile, however, because chemicals are used for disinfection, not environmentally friendly.

EP1927280A2 discloses a method for producing bedding for animals in stable facilities based on vegetable straw which is finely cut. The finely cut straw is pelletized at such a pressure that heating to a temperature between 120°C and 160°C is produced. Sterilisation of the material due to the temperatures produced at the heating during pelletizing is achieved. Furthermore, protruding fibre ends or straw parts from the fibre bundles/the short straws at the pressing/compression performed at the pelletizing, will be mashed and crushed so that afterwards they appear softened as the cell structure in the elementary fibres and the straw parts is crushed and comminution of pelletized material is performed. Hence is formed loose bedding consisting of individual bundles of elementary fibres/short straw parts.

US5271355 discloses an absorbent material which includes a mixture of poplar wood and peat in the volume ratio range 1:0.01 to 1:100, the material being formed to be dispensable for absorbing liquids and other substances. The material is produced by grinding poplar chips into a sawdust-like poplar material, drying the poplar material to remove moisture therefrom and mixing the poplar material with a quantity of peat to form the absorbent material.

EP3136845 discloses composition suitable for use as poultry bedding based on wood shavings and sphagnum. The flow-flowing characteristic of the composition renders it very easy to apply and distribute on the floor of the stall. Moreover, the composition is easy to turn around and mix for the farmer. However, the selected wood is hard enough and the selected amount of it provides sufficient moisture to the litter

The suggested invention is dedicated to overcoming mentioned shortcomings and for the achievement of further additional advantages over prior art and by possibility to apply new composition and the method for the preparation of the bedding litter.

### SUMMARY OF THE INVENTION

The aim of the invention is to provide a peat composition which comprises wood shavings and sphagnum peat moss. The peat composition additionally comprises *Eriophorum* fibers which provide enhance aeration within the peat composition.

The composition is suitable for use as animal bedding or plant substrate and comprises the sphagnum peat moss and wood shavings, wherein the ratio of the sphagnum peat moss and wood shavings ranges from 72/28% vol/vol to 90/10% vol/vol. The sphagnum peat moss is sphagnum peat moss heated to 50-65°C temperature to ensure seed growth prevention during storage.

Wood shavings consist of soft coniferous wood and soft deciduous wood, which is selected from aspen, linden or poplar. It is important that the ratio of soft coniferous wood and soft deciduous wood is in the range from 30/70% vol/vol to 50/50% vol/vol.

The wood shavings are in length from 10 to 40 mm, width from 5 to 20 mm, thickness from 0.1 to 0.6 mm. The range of wood shaving size is selected so that the shavings compaction occurs at the end of the animal growing cycle. It is also important for further use in plant production. The selected sufficient size maintains the correct structure of the litter during animal rearing.

In addition, composition comprises *Eriophorum* fibers in amount of 10-30% based on the total amount of peat moss. *Eriophorum* fibers are used if there is a lot of humidity in the environment (50% or more) to improve water drainage.

In another embodiment, the invention provides a method for the preparation of peat composition for use as animal bedding litter or plant substrate, wherein said method comprises a) preparation of wood shavings which consist of soft deciduous wood and soft coniferous wood which ratio are in the range from 30/70% vol/vol to 50/50% vol/vol; b) before mixing, heating the sphagnum peat moss to 50-65°C; c) mixing of sphagnum peat moss and wood shavings, wherein the ratio of the sphagnum peat moss and wood shavings ranges from 72/28% vol/vol to 90/10% vol/vol; and d) packing and labelling the produced peat composition product for further transportation.

The method of the preparation of peat composition for use as animal bedding litter or plant substrate additionally comprises adding *Eriophorum* fibers to the sphagnum peat moss in amount of 10-30% based on the total amount peat moss.

The peat composition is suitable for use as animal letter, preferably poultry litter and also as plant substrate for creation of acidic soil.

### BRIEF DESCRIPTION OF DRAWINGS

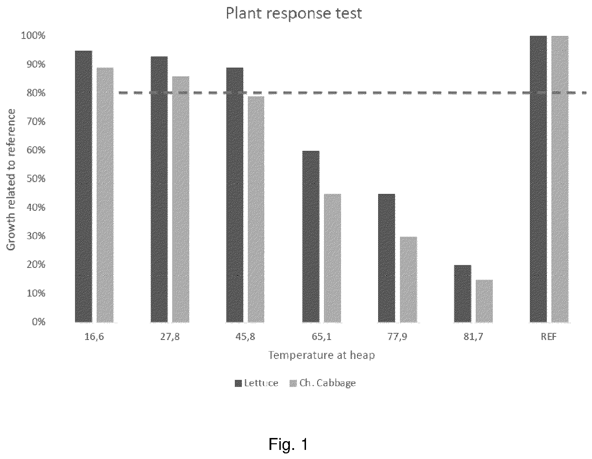

Fig. 1 shows a plant response test.

### DETAILED DESCRIPTION OF THE INVENTION

The purpose of the present invention is to improve the characteristics of litter for animal and plant substrate, i.e. to provide high quality peat composition with great aeration, high moisture absorption capacity and antibacterial properties, which is free of chemical impurities and ensure seed growth prevention during storage.

The present invention provides peat composition which comprises sphagnum peat moss and wood shavings. In addition, peat composition comprises *Eriophorum* fibers which enhance aeration within the bedding litter or within plant substrate, helping to distribute moisture evenly throughout the material.

Free from chemical impurities such as varnishes, impregnates, and paints, often found in wood from the furniture industry. Wood only from our own forests is used for the preparation of peat composition. No negative effects on plant growth post-use, allowing for safe reuse as growing medium. No harmful chemicals present in peat composition, ensuring animal health and preventing respiratory issues.

### PEAT TYPE AND PEAT COMPOSITION

The peat composition comprises sphagnum peat moss. Sphagnum peat moss is chosen for its light structure, superior absorbency and low density, which helps maintain the bedding's overall lightness and ease of handling. The high percentage of peat in the composition not only helps to bind fine particles from the wood shavings, thereby reducing airborne dust but also improves the overall air quality within the poultry barn. The natural acidity of the peat (pH 3.5-5.4) significantly inhibits bacterial growth, a benefit that is enhanced by the antibacterial properties of the wood shavings. Provided peat composition is suitable for use as plant substrate which provides acidic environment in the soil.

Depending on the humidity of the environment *Eriophorum* fibers are added to sphagnum peat moss in amount of 10-30% based on the total amount of sphagnum peat moss. *Eriophorum* fibers enhance aeration within the bedding, helping to distribute moisture evenly throughout the material. These fibers are critical in preventing the compaction of the peat, thereby enhancing the peat composition overall effectiveness.

The sphagnum peat moss used has a particle size ranging from 0 to 20 mm, which is optimal for maintaining good soil structure and ensuring adequate moisture control. The wood shavings are in length from 10 to 40 mm, width from 5 to 20 mm, thickness from 0.1 to 0.6 mm. The range of wood shaving size is selected so that the shavings compaction occurs at the end of the animal growing cycle. Bedding lasts throughout the poultry farming cycle without degrading. It is also important for further use in plant production.

Wood shavings are the secondary component of peat composition, which comprise soft deciduous wood, such as aspen, linden, and poplar. These woods are chosen for their softer texture, which reduces the risk of injury to the poultry and provides a softer bedding material. Another part of the wood shavings is soft coniferous wood. The soft coniferous wood is pine or spruce, which adds structural integrity to the bedding and helps maintain its shape and form. The ratio of soft coniferous wood and soft deciduous wood is in the range from 30/70% vol/vol to 50/50% vol/vol.

Specifically, the dimensions of wood shavings are the following: thickness: 0.4-0.6 mm; width: 12-14 mm and length: 20-25 mm. These dimensions are meticulously chosen to ensure the wood shavings are large enough to maintain the structural integrity of the peat composition while being small enough to decompose effectively post-use. The specific size of the wood shavings allows for their complete decomposition within the typical usage cycle of the bedding, which aligns with sustainable agricultural practices. Specific size requirements for wood shavings ensure they decompose properly during and after use.

Wood shavings are guaranteed to be free from chemical impurities such as varnishes, impregnates, and paints, which are often found in wood sourced from the furniture industry. Wood is sourced exclusively from our own forests to ensure this purity.

The composition comprises the sphagnum peat moss and wood shavings, wherein the ratio of the sphagnum peat moss and wood shavings ranges from 72/28% vol/vol to 90/10% vol/vol.

Laboratory measurements show that the peat moss can absorb up to 8 times its weight in water, while the wood shavings can absorb 2-3 times their weight. This high absorption capacity is crucial for maintaining dryness and comfort within the poultry environment.

### PRODUCTION METHOD

The present invention provides a method for preparing peat composition wherein wood shaving raw material is prepared by mixing soft deciduous wood and soft coniferous wood, wherein the ratio of soft coniferous wood and soft deciduous wood is in the range from 30/50% vol/vol to 70/50% vol/vol. The sphagnum peat moss is naturally heated to 50-65°C temperature. This temperature is optimal for disinfecting the sphagnum peat moss and eliminating its agronomic properties, rendering it unsuitable for the growth of plant seeds and harmful microbes during usage. Plant response test confirms that heating the sphagnum peat moss to 55°C temperature effectively disinfects the material, as evidenced by the inhibition of microbial growth and seed germination throughout the bedding's use (Fig. 1). This process serves as an additional disinfection method and eliminates agronomic properties, making the prepared peat composition unsuitable for plant seed growth during the bedding's use.

The method comprises the additional step of adding *Eriophorum* fibers to the sphagnum peat moss, depending on the moisture of the environment. *Eriophorum* fibers are added to the sphagnum peat moss in amount of 10-30% based on the total amount of the sphagnum peat moss.

The heated peat is then thoroughly mixed with the wood shavings to ensure a uniform distribution of both components throughout the bedding material in the ratio of soft coniferous wood and soft deciduous wood is in the range from 30/50% vol/vol to 70/50% vol/vol.

Prepared peat product composition is packing and labelling the produced product for further transportation.

### EXAMPLES

### Example 1 (reference example)

The peat composition is prepared from wood chips and the sphagnum peat moss in the ratio of 20/80% vol/vol with a degree of fragmentation of 40. The raw material of wood shaving is prepared by mixing soft deciduous wood and soft coniferous wood, wherein the ratio of soft coniferous wood and soft deciduous wood is 30/70% vol/vol, thus ensuring less compaction and stickiness of the chip. Wood chip thickness is no more than 0.2-0.5 mm. 80% of the chip width and length used is no more than 20 mm and no less than 10 mm. The sphagnum peat moss is naturally heated to 55°C temperature before mixing. In this way, the sphagnum peat moss is additionally disinfected. The heated sphagnum peat moss medium becomes unsuitable for the development of plant seeds and other plants during the use of bedding litter.

The heated sphagnum peat moss is then thoroughly mixed with the wood shavings to ensure a uniform distribution of both components throughout the bedding material.

Prepared peat composition product is packing and labelling for further transportation. Prepared product is used as animal litter or plant substrate.

### Example 2

The composition is prepared from wood chips and the sphagnum peat moss in the ratio of 25/75% vol/vol with a degree of fragmentation of 40. The raw material of wood shaving is prepared by mixing soft deciduous wood and soft coniferous wood, wherein the ratio of soft coniferous wood and soft deciduous wood is 40/60% volo/vol, thus ensuring less compaction and stickiness of the chip. Wood chip thickness is no more than 0.3-0.5 mm. 80% of the chip width and length used is no more than 20 mm and no less than 10 mm. The sphagnum peat moss is naturally heated to 60°C temperature before mixing. In this way, the sphagnum peat moss is additionally disinfected. The heated sphagnum peat moss medium becomes unsuitable for the development of plant seeds and other plants during the use of bedding litter.

*Eriophorum* fibers are added to the sphagnum peat moss in amount of 30% based on the amount of the sphagnum peat moss.

The heated sphagnum peat moss is then thoroughly mixed with the wood shavings to ensure a uniform distribution of both components throughout the peat composition product.

Prepared peat composition product is packing and labelling for further transportation. Prepared product is used as animal litter or plant substrate.

These results underscore the efficacy of the peat product composition in providing a safe, sustainable, and effective environment for animal farming, ensuring both animal health and operational efficiency. The prepared peat composition is used as plant substrate as a growing medium and as a soil improver. Especially recommended for plants that like acidic soil.

The requirements for the largest dimensions of the chip, and especially the thickness, ensure its decomposition and the proper use of the spent litter in crop production. This is very relevant when the litter cycle used on the farm is short and the wood chips must decompose during that period. The requirements for the type of wood and the smallest dimensions ensure the necessary structure during operation. The requirement to contain 72-90% sphagnum peat moss in the peat composition ensures the following exceptional properties: 1) the sphagnum peat moss absorbs moisture 8 times its weight in water, and wood chips about 2-3 times in weight. 2) Wood chips can break and thus produce small particles that harm the respiratory system. For the composition comprising 72-90% sphagnum peat moss, these small particles are bound by the peat and thus neutralize their negative effect. 3) Wood chips do not have significant antibacterial properties, which are unique to the sphagnum peat moss. 4) The natural acidity of sphagnum peat moss of 3.5-5.4 is unsuitable for the growth and reproduction of many bacteria. 5) By using no more than 28% of wood chips, the properties of this antibacterial crack are significantly strengthened during the entire cycle of breeding birds or animals. 6) Prepared peat product composition is suitable for use as plant substrate as a growing medium and as a soil improver.

## Claims

1. A peat composition, wherein said composition comprises:
sphagnum peat moss heated to a temperature in the range of 50-65°C, wood shavings, prepared from soft deciduous wood and soft coniferous wood and *Eriophorum* fibers,
wherein the ratio of the sphagnum peat moss and wood shavings ranges from 72/28% vol/vol to 90/10% vol/vol,
wherein the ratio of soft coniferous wood and soft deciduous wood is in the range from 30/70% vol/vol to 50/50% vol/vol.

2. The peat composition according to claim 1, wherein composition comprises *Eriophorum* fibers in amount of 10-30% based on the total amount of peat moss.

3. The peat composition according to claims 1 and 2, wherein soft deciduous wood is aspen, linden or poplar.

4. The peat composition according to claims 1-3, wherein the wood particles are in length from 10 to 40 mm, width from 5 to 20 mm, thickness from 0.1 to 0.6 mm.

5. Method for the preparation of peat composition according to claims 1-4, wherein said method comprises following steps:
a) preparation of wood shavings from soft deciduous wood and soft coniferous wood;
b) before mixing, heating the sphagnum peat moss to 50-65°C;
c) adding *Eriophorum* fibers to sphagnum peat moss;
d) mixing of sphagnum peat and wood shavings wherein the ratio of the sphagnum peat moss and wood shavings ranges from 72/28% vol/vol to 90/10% vol/vol.

6. Method for the preparation of composition according to claim 5, wherein the ratio of soft coniferous wood and soft deciduous wood is in the range from 30/70% vol/vol to 50/50% vol/vol.

7. Method for the preparation of composition according to claims 5 and 6, wherein soft deciduous wood is aspen, linden or poplar.

8. Use of a composition according to claim 1 as animal litter.

9. Use of a composition according to claim 8 as poultry litter.

10. Use of a composition according to claim 1 as plant substrate.

## Patentansprüche

1. Eine Torfzusammensetzung, wobei die Zusammensetzung Folgendes umfasst:
- Sphagnum-Torfmoos, das auf eine Temperatur im Bereich von 50-65 °C erhitzt wurde,
- Holzspäne, hergestellt aus weichem Laubholz und weichem Nadelholz, und
- Eriophorum-Fasern,
wobei das Verhältnis von Sphagnum-Torfmoos zu Holzspänen im Bereich von 72/28 vol/vol bis 90/10 vol/vol liegt,
wobei das Verhältnis von weichem Nadelholz zu weichem Laubholz im Bereich von 30/70 vol/vol bis 50/50 vol/vol liegt.

2. Torfzusammensetzung nach Anspruch 1, wobei die Zusammensetzung Eriophorum-Fasern in einer Menge von 10-30 % bezogen auf die Gesamtmenge des Torfmooses umfasst.

3. Torfzusammensetzung nach den Ansprüchen 1 und 2, wobei das weiche Laubholz Espe, Linde oder Pappel ist.

4. Torfzusammensetzung nach den Ansprüchen 1 bis 3, wobei die Holzpartikel eine Länge von 10 bis 40 mm, eine Breite von 5 bis 20 mm und eine Dicke von 0,1 bis 0,6 mm aufweisen.

5. Verfahren zur Herstellung einer Torfzusammensetzung nach den Ansprüchen 1 bis 4, wobei das Verfahren folgende Schritte umfasst:
a) Herstellung von Holzspänen aus weichem Laubholz und weichem Nadelholz;
b) vor dem Mischen, Erhitzen des Sphagnum-Torfmooses auf 50-65 °C;
c) Zugeben von Eriophorum-Fasern zu dem Sphagnum-Torfmoos;
d) Mischen von Sphagnum-Torfund Holzspänen, wobei das Verhältnis des Sphagnum-Torfmoos zu den Holzspänen im Bereich von 72/28 vol/vol bis 90/10 vol/vol liegt.

6. Verfahren zur Herstellung einer Zusammensetzung nach Anspruch 5, wobei das Verhältnis von weichem Nadelholz zu weichem Laubholz im Bereich von 30/70 vol/vol bis 50/50 vol/vol liegt.

7. Verfahren zur Herstellung einer Zusammensetzung nach den Ansprüchen 5 und 6, wobei das weiche Laubholz Espe, Linde oder Pappel ist.

8. Verwendung einer Zusammensetzung nach Anspruch 1 als Tierstreu.

9. Verwendung einer Zusammensetzung nach Anspruch 8 als Geflügelstreu.

10. Verwendung einer Zusammensetzung nach Anspruch 1 als Pflanzensubstrat.

## Revendications

1. Composition de tourbe, dans laquelle ladite composition comprend :
de la mousse de tourbe de sphaigne chauffée à une température comprise entre 50 et 65 °C,
des copeaux de bois préparés à partir de bois feuillu tendre et de bois résineux tendre, et
des fibres d'Eriophorum,
dans laquelle le rapport entre la mousse de tourbe de sphaigne et les copeaux de bois est compris entre 72/28 % vol/vol et 90/10 % vol/vol,
dans laquelle le rapport entre le bois résineux tendre et le bois feuillu tendre est compris entre 30/70 % vol/vol et 50/50 % vol/vol.

2. Composition de tourbe selon la revendication 1, dans laquelle la composition comprend des fibres d'Eriophorum en une quantité de 10 à 30 % sur la base de la quantité totale de mousse de tourbe.

3. Composition de tourbe selon les revendications 1 et 2, dans laquelle le bois feuillu tendre est du tremble, du tilleul ou du peuplier.

4. Composition de tourbe selon les revendications 1 à 3, dans laquelle les particules de bois ont une longueur de 10 à 40 mm, une largeur de 5 à 20 mm et une épaisseur de 0,1 à 0,6 mm.

5. Procédé de préparation d'une composition de tourbe selon les revendications 1 à 4, dans lequel ledit procédé comprend les étapes suivantes :
a) préparation de copeaux de bois à partir de bois feuillu tendre et de bois résineux tendre ;
b) avant le mélange, chauffage de la mousse de tourbe de sphaigne à 50-65 °C ;
c) ajout de fibres d'Eriophorum à la mousse de tourbe de sphaigne ;
d) mélange de la tourbe de sphaigne et des copeaux de bois, dans lequel le rapport entre la mousse de tourbe de sphaigne et les copeaux de bois est compris entre 72/28 % vol/vol et 90/10 % vol/vol.

6. Procédé selon la revendication 5, dans lequel le rapport entre le bois résineux tendre et le bois feuillu tendre est compris entre 30/70 % vol/vol et 50/50 % vol/vol.

7. Procédé selon les revendications 5 et 6, dans lequel le bois feuillu tendre est du tremble, du tilleul ou du peuplier.

8. Utilisation d'une composition selon la revendication 1 comme litière pour animaux.

9. Utilisation d'une composition selon la revendication 8 e comme litière pour volaille.

10. Utilisation d'une composition selon la revendication 1 comme substrat pour plantes.
